# EUROPEAN PATENT APPLICATION

(11) **EP 1 845 720 A1**
(43) Date of publication of application: **17.10.2007**
(21) Application number: 06712585.6
(22) Date of filing: 30.01.2006
(51) Int. Cl.: H04N 5/76, H04H 1/00, H04N 7/173

(54) **PROGRAM RECORDING DEVICE, PROGRAM RECORDING METHOD, PROGRAM RECORDING PROGRAM, AND COMPUTER-READABLE RECORDING MEDIUM**

(30) Priority: 31.01.2005 JP 2005024350
(71) Applicant: Pioneer Corporation, Tokyo 1538654 (JP)
(72) Inventor: KOGA, Koji Pioneer Corporation, Tokyo, 1538654 (JP); SHIBASAKI; Hiroaki Pioneer Corporation, Tokyo, 1538654 (JP); KITADA; Mari Pioneer Corporation, Tokyo, 1538654 (JP); WATANABE, Shuuji Pioneer Corporation, Tokyo, 1538654 (JP); MORIKAWA, Kiyoshi Pioneer Corporation, Tokyo, 1538654 (JP)
(74) Representative: Haley, Stephen
(86) International application number: PCT/JP2006/301442
(87) International publication number: WO 2006/080493

(57) **Abstract**

A program recording device includes a route searching unit (101) that searches for a route to a destination based on map information, a keyword creating unit (102) that creates a keyword from information concerning the destination or information concerning the route, a determining unit (103) that determines a program to be recorded based on the keyword that is created by the keyword creating unit (102), and a recording unit (104) that records the program that is determined by the determining unit (103).

## Description

### TECHNICAL FIELD

The present invention relates to a program recording device, a program recording method, a program recording program, and a computer-readable recording medium. However, application of the present invention is not limited to the program recording device, the program recording method, the program recording program, and the computer-readable recording medium.

### BACKGROUND ART

Conventionally, there is a program recording device that records broadcasted programs. In such a program recording device, by specifying a broadcast date, a broadcast time, a broadcast channel, and the like in advance, the program can be automatically recorded. Furthermore, there is also a program recording device that can be programmed to record programs relating to a keyword by setting a certain keyword, without individually setting the broadcast dates, the broadcast times, the broadcast channels, and the like thereof (for example, Patent Document 1 below).

Patent Document 1: Japanese Patent Laid-Open Publication No. 2004-193943

### DISCLOSURE OF INVENTION

### PROBLEM TO BE SOLVED BY THE INVENTION

In the conventional program recording devices, however, there has been a problem, for example, that timer-recording cannot be performed without specifying the broadcast date, the broadcast time, the broadcast channel, or a keyword for programs wished to be recorded.

### MEANS FOR SOLVING PROBLEM

A program recording device according to claim 1 of the invention includes a route searching unit that searches for a route to a destination based on map information; a keyword creating unit that creates a keyword from information concerning the destination or information concerning the route; a determining unit that determines a program to be recorded based on the keyword that is created by the keyword creating unit; and a recording unit that records the program that is determined by the determining unit.

A program recording method according to claim 7 of the invention includes searching for a route to a destination based on map information; creating a keyword from information concerning the destination or information concerning the route; determining a program to be recorded based on the keyword that is created by the keyword creating unit; and recording the program that is determined by the determining unit.

A program recording program according to claim 8 of the invention causes a computer to execute the program recording method according to claim 7.

A computer-readable recording medium according to claim 8 of the invention stores therein the program recording program according to claim 8.

### BRIEF DESCRIPTION OF DRAWINGS

Fig. 1 is a block diagram illustrating one example of a functional configuration of a program recording device according to a first embodiment of the present invention;
Fig. 2 is a flowchart for explaining processing performed by the program recording device according to the first embodiment of the present invention;
Fig. 3 is a block diagram illustrating one example of a functional configuration of a program recording device according to a second embodiment of the present invention;
Fig. 4 is a flowchart for explaining processing performed by the program recording device according to the second embodiment of the present invention;
Fig. 5 is a block diagram illustrating one example of a hardware configuration of a navigation device according to an example of the present invention;
Fig. 6 is a flowchart for explaining procedures of processing performed at creating a keyword;
Fig. 7 is a flowchart for explaining a processing performed at the time of creating a program timer-recording list;
Fig. 8 is a flowchart for explaining procedures of a processing performed at program recording;
Fig. 9 is a flowchart for explaining procedures of another processing performed at program recording;
Fig. 10 is a diagram for explaining one example of a season database
Fig. 11 is a diagram for explaining one example of another season database;
Fig. 12 is a diagram for explaining one example of a region database;
Fig. 13 is a diagram for explaining one example of a name attribute database;
Fig. 14 is a diagram for explaining one example of a recording keyword list;
Fig. 15 is a diagram for explaining an example of an EPG list; and
Fig. 16 is a diagram for explaining one example of a program timer-recording list.

### EXPLANATIONS OF LETTERS OR NUMERALS

- 101: Route searching unit
- 102: Keyword creating unit
- 103: Determining unit
- 104: Recording unit
- 105: Time-information acquiring unit
- 106: Weather-information acquiring unit
- 107: Detecting unit

### BEST MODE(S) FOR CARRYING OUT THE INVENTION

Exemplary embodiments of a program recording device, a program recording method, a program recording program, and a computer-recording medium according to the present invention are explained in detail below with reference to the accompanying drawings.

### (First Embodiment)

### (Functional Configuration of Program Recording Device)

First, a program recording device according to a first embodiment of the present invention is explained. The program recording device according to the embodiments of the present invention is mounted on a mobile object having a mobile unit. The mobile object may be, for example, a vehicle (including four-wheel vehicles and two-wheel vehicles). For example, when the mobile object is a vehicle, the mobile unit is implemented by each unit and each function for the vehicle to travel. The mobile unit includes a battery that is mounted on the vehicle.

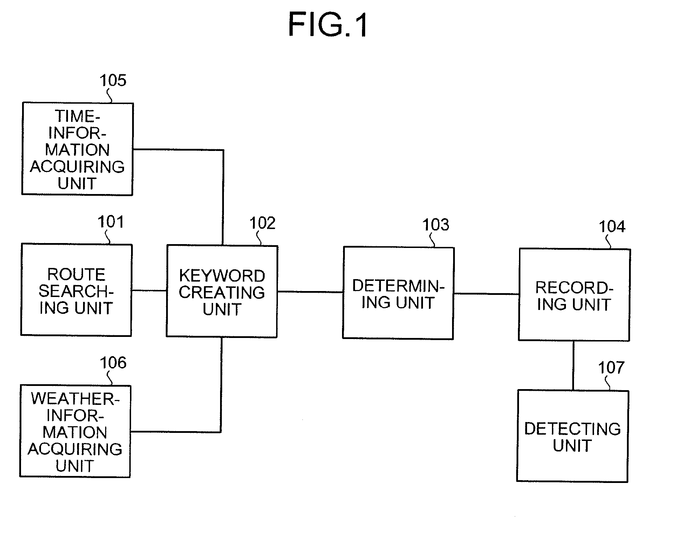

Fig. 1 is a block diagram illustrating one example of a functional configuration of the program recording device according to an embodiment of the present invention. As shown in Fig. 1, the program recording device according to the embodiment includes a route searching unit 101, a keyword creating unit 102, a determining unit 103, a recording unit 104, a time-information acquiring unit 105, a weather-information acquiring unit 106, and a detecting unit 107.

The route searching unit 101 searches for a route to a destination based on map information. When searching for a route, a route of high priority is searched for based on settings that are made in advance by a user or the like. For example, the setting that is made in advance includes designation that "the fastest route to the destination is searched for rather than the shortest route", "a route is searched for giving priority to ordinary roads (or toll roads)", "a route is searched for so as to pass roads having width of 6 m or more", and the like. The route searched for by the route searching unit 101 or information concerning the destination that is set at the route searching is stored by a storage unit, not shown, included in the program recording device.

The routes searched for by the route searching unit 101 include a route that is newly searched for during route guidance in addition to a route that is searched for before the route guidance begins. The search is re-performed when a transit point or a destination is intentionally changed by the user, in addition to when there is a traffic jam on the route. It is often the case that an intention of the user is reflected in the newly searched for route. For example, when a route passing along a coast is searched for after a route passing along mountains is searched for, it can be presumed that a preference for the route passing along a coast relative to the route passing along mountains is most likely reflected.

The keyword creating unit 102 creates a keyword from information concerning the destination or information concerning the route that is searched for by the route searching unit 101. The keyword creating unit 102 can be configured to create, based on information acquired by the time-information acquiring unit 105, a keyword from the information concerning the destination or the information concerning the route that is searched for by the route searching unit 101. The keyword creating unit 102 can be configured to create, based on the information acquired by the time-information acquiring unit 106, a keyword from the information concerning the destination or the information concerning the route that is searched for by the route searching unit 101.

The determining unit 103 determines a program to be recorded based on the keyword that is created by the keyword creating unit 102. The determining unit 103 can make the determination, for example, so that a program that includes the keyword created by the keyword creating unit 102 in the title thereof is to be recorded. The recording unit 104 records the program that is determined to be recorded by the determining unit 103. The recording unit 104 records the program based on a remaining power of a battery that is detected by the detecting unit 106. More specifically, the recording unit 104 records the program when the battery has the remaining power that enables the program recording considering a recording time of the program to be recorded.

The time-information acquiring unit 105 acquires information concerning at least one of a date and time at which the route is searched for, and a date and time at which the mobile unit travels on the route. Hereinafter, in the present embodiment, the "information concerning at least one of date and time at which the route is searched for, and date and time at which the mobile unit travels on the route" is explained as the "time information". The time-information acquiring unit 105 can include a special storage unit that stores the date and time, for example, every time a route is searched for or every time the mobile unit travels on the route. In this case, the time-information acquiring unit 105 can acquire the time information from the special storage unit. Moreover, the time-information acquiring unit 105 can be configured to acquire the time information, for example, from information concerning a history of routes that are searched for by the route searching unit 101.

The weather-information acquiring unit 106 acquires information concerning the weather when a route is searched for or information concerning the weather when the mobile unit travels on the route. Hereinafter, in the present embodiment, the "information concerning the weather when a route is searched for or information concerning the weather when the mobile unit travels on the route" is explained as the "weather information". The weather-information acquiring unit 106 can include a special storage unit that stores information concerning the weather at the time, for example, a route search is performed or when the mobile unit travels on the route and can store the information every time either incident occurs. In this case, the weather-information acquiring unit 106 can acquire the weather information from the special storage unit.
Moreover, the weather-information acquiring unit 106 can be configured to acquire information concerning the weather when a route is searched for by the route searching unit 101, or when the mobile unit travels on the route that is searched for by the route searching unit 101, appropriately from an external source. In the present embodiment, the time-information acquiring unit 105 and the weather-information acquiring unit 106 are involved in creation of a keyword by the keyword creating unit 102.

The detecting unit 107 detects a remaining power level of a battery in the mobile unit. Specifically, for example, the detecting unit 107 detects voltage of the battery that is mounted on the vehicle. The detecting unit 107 can be configured to detect the remaining power of the battery by detecting whether the voltage of the battery is equal to or higher than a predetermined value.

### (Procedures of Processing by Program Recording Device)

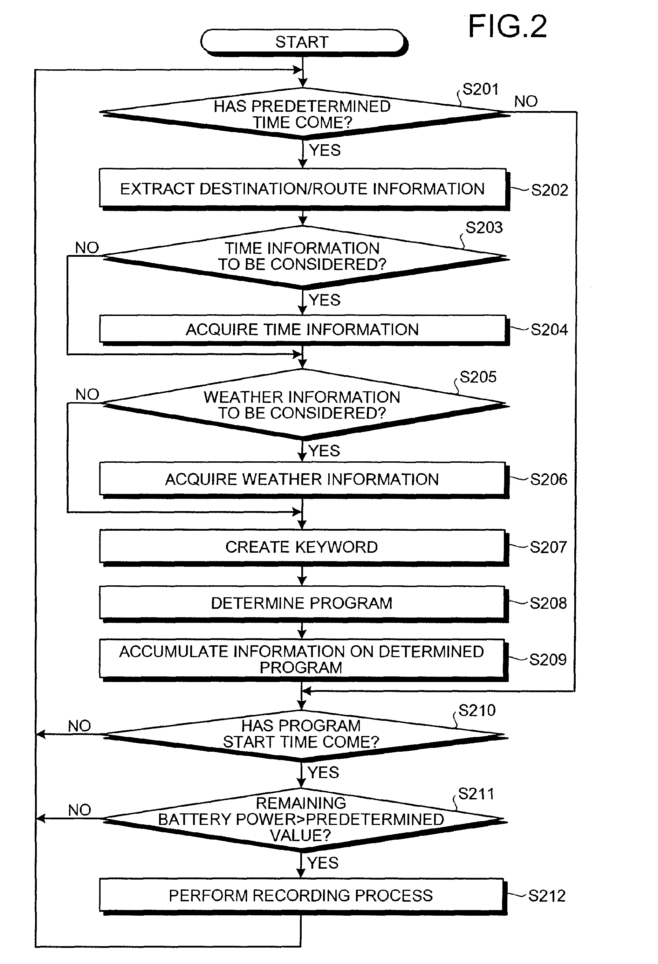

Next, processing by the program recording device according to the embodiments of the present invention is explained. Fig. 2 is a flowchart for explaining the processing by the program recording device according to the embodiments of the present invention. The processing shown in Fig. 2 is performed on a condition that the route search has previously been performed by the route searching unit 101. In the processing shown in Fig. 2, first, it is determined whether a predetermined time has come (step S201). The "predetermined time" can be, for example, a regular time such as 12 o'clock and 6 o'clock, a time that is set in advance by a user, or a time at which predetermined time period has passed since previous processing. When it is determined that the predetermined time has not come yet (step S201: NO), the processing proceeds to step S210.

When it is determined that the predetermined time has come (step S201: YES), destination information or route information (shown as destination/route information in Fig. 2) is extracted (step S202). At step S202, information concerning destinations that have been set in the past including the current set, and on routes to the destinations that have been searched for by the route searching unit 101 is extracted. The information extracted at step S202 can be extracted from, for example, information that is stored in a storage unit that is included in the program recording device.

Next, it is determined whether to consider the time information (step S203). The determination whether to consider the time information can be made based on setting in, for example, the determining unit 102. When it is determined to consider the time information (step S203: YES), the time information is acquired (step S204). If the special storage unit is provided for storing the time information, the time information is acquired from the storage unit. It can be configured to acquire the information from information concerning the history without providing the special storage unit, if the history of routes that have been searched for by the route searching unit 101 are available. When it is determined not to consider the time information (step S203: NO), the processing proceeds to step S205.

Subsequently, it is determined whether to consider the weather information (step S205). The determination whether to consider the weather information can be made based on a setting in, for example, the determining unit 102. When it is determined to consider the weather information (step S205: YES), the weather information is acquired (step S206). If the special storage unit is provided for storing the weather information, the weather information is acquired from the special storage unit. Moreover, it can be configured to acquire the information from an external source at the point of time when it is determined to consider the weather information, without providing the special storage unit. When it is determined not to consider the weather information (step S205: NO), the processing proceeds to step S207.

Thereafter, a keyword is created from the information concerning the destination or the information concerning the route that has been searched for by the route searching unit 101 (step S207). At step S207, if it has been determined to consider the time information at step S203, the keyword is created considering the time information. Specifically, for example, when "winter" is acquired as the time information and "Naeba" is the destination, a keyword of "skiing" is created. Moreover, for example, even when the destination is "Naeba", if "summer" is acquired as the time information, a keyword of "summer resort" is created. Other than these examples, for example, when "rain" is acquired as the weather information, and the destination is "department store", a keyword of "shopping" can be created.

Next, a program to be recorded is determined based on the created keyword (step S208), and information concerning the determined program is accumulated (step S209). At step S208, for example, a program that includes the keyword that is created at step S207 in the title thereof is determined to be timer-recorded. Specifically, for example, if a keyword of "skiing" is created, a program titled "skiing and snowboarding ground information" and the like are determined to be timer-recorded. The "information on the program" that is accumulated at step S209 is, for example, information required to record the program such as a broadcast date, a broadcast time, and a broadcast channel. If it is not determined that the program start time has come (step S210: NO), the processing returns to step S201.

When it is determined that the program start time has come (step S210: YES), it is determined whether the remaining power of battery is greater than a predetermined value (step S211). In Fig. 2, the processing at step S211 is described as "battery remaining power>predetermined value?". When it is determined that the remaining power of the battery is greater than the predetermined value (step S211: YES), a recording process is performed (step S212). At step S212, the program that is identified by the information concerning the program accumulated at step S209 is recorded. When it is determined that the remaining power of the battery is less than the predetermined value (step S211: NO), the processing returns to step S201. Even when it is determined that the remaining power of the battery is lower than the predetermined value at step S211, there is a possibility that the capacity of the battery becomes equal to or higher than the predetermined value afterwards, as a result of long distance operation of the vehicle on which the program recording device is mounted.

As described, according to the program recording device of the first embodiment, a keyword is created from the information concerning a destination or information concerning a route to the destination that is searched for based on map information. A program to be recorded is determined based on the created keyword. The determined program is then recorded. Thus, it is possible to record a program that is related to activities of the user without requiring a complicated operation such as designation of a broadcast date, a broadcast time, and a broadcast channel, or a keyword in advance. As a result, it is possible to record a program for which the user has an interest (or program that is related to the interest) without requiring an operation by the user.

According to the program recording device of the first embodiment of the present invention, at recording, information concerning at least one of a date and time at which a route is searched for and a date and time at which the mobile unit travels on the route is acquired. A keyword is created, based on the acquired information, from the information concerning the destination or the information concerning the route. Furthermore, according to the program recording device of the first embodiment, information concerning the weather at the time when the route is searched for or the weather at the time when the moving unit travels on the route is acquired. Based on the acquired information, a keyword is created from the information concerning the destination or information concerning the route. Thus, according to the program recording device of the first embodiment, a keyword considering the time information and the weather information can be created. A program to be recorded is then determined based on this keyword, thereby enabling to record a program that is further related to activities of a user or memories relating to the activities.

In addition, according to the program recording device of the present embodiment, a remaining power level of a battery is detected, and a program is recorded based on the detected remaining power level of the battery. Thus, it is possible to prevent cessation of recording in the middle of the program due to insufficient battery power.

### (Second Embodiment)

### (Hardware Configuration of Navigation Device)

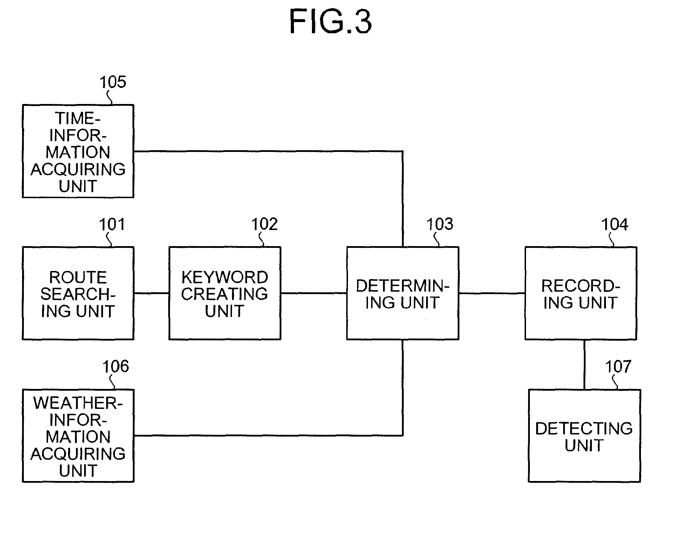

Next, a program recording device according to a second embodiment of the present invention is explained. First, a program recording device according to a second embodiment of the present invention is explained. The program recording device according to the embodiments of the present invention is mounted on a mobile object having a mobile unit. The mobile object may be, for example, a vehicle (including four-wheel vehicles and two-wheel vehicles). For example, when the mobile object is a vehicle, the mobile unit is implemented by each unit and each function for the vehicle to travel. The mobile unit includes a battery that is mounted on the vehicle. Fig. 3 is a block diagram illustrating one example of a functional configuration of the program recording device according to the second embodiment of the present invention. As shown in Fig. 3, the program recording device according to the embodiment includes a route searching unit 101, a keyword creating unit 102, a determining unit 103, a recording unit 104, a time-information acquiring unit 105, a weather-information acquiring unit 106, and a detecting unit 107.

The time-information acquiring unit 105 and the weather-information acquiring unit 106 according to the second embodiment are involved in the determination by the determining unit. Specifically, the determining unit 103 according to the second embodiment determines a program to be recorded based on the keyword that is created by the keyword creating unit 102 and the information that is acquired by the time-information acquiring unit 105. Moreover, the determining unit 103 according to the present embodiment determines a program to be recorded based on the keyword that is created by the keyword creating unit 102 and the information that is acquired by the weather information acquiring unit 106.

### (Procedures of Processing by Program Recording Device)

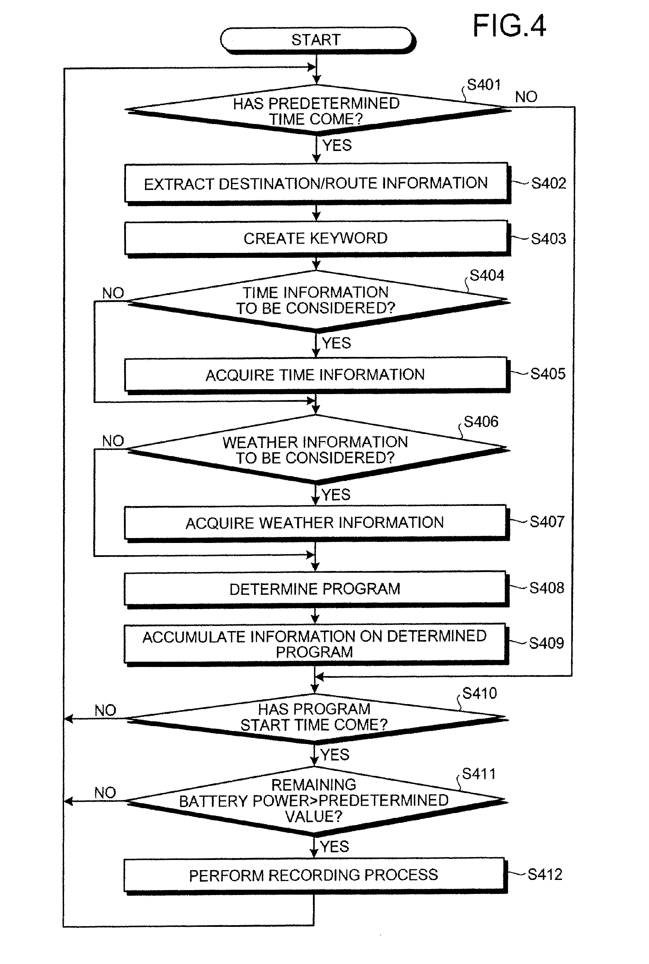

Next, processing by the program recording device according to the second embodiment of the present invention is explained. Fig. 4 is a flowchart for explaining the processing by the program recording device according to the embodiments of the present invention. The processing shown in Fig. 4 is performed on a condition that the route search has previously been performed by the route searching unit 101. In the processing shown in Fig. 4, first, it is determined whether a predetermined time has come (step S401). The "predetermined time" can be, for example, a regular time such as 12 o'clock and 6 o'clock, a time that is set in advance by a user, or a time at which predetermined time period has passed since previous processing. When it is determined that the predetermined time has not come yet (step S401: NO), the processing proceeds to step S410.

When it is determined that the predetermined time has come (step S401: YES), destination information or route information (shown as destination/route information in Fig. 4) is extracted (step S402). At step S402, information concerning destinations that have been set in the past including the current set, and on routes to the destinations that have been searched for by the route searching unit 101 is extracted. The information extracted at step S402 can be extracted from, for example, information that is stored in a storage unit that is included in the program recording device.

A keyword is then created from the information concerning the destination or the information concerning the route that is searched for by the route searching unit 101 (step S403). For example, when the destination is "Tokyo Zoo", keywords such as "panda", "koala", "giraffe", "lion", and other such expressions indicative of creatures kept in the zoo are created.

Next, it is determined whether to consider the time information (step S404). The determination whether to consider the time information can be made based on setting in, for example, the determining unit 103. When it is determined to consider the time information (step S404: YES), the time information is acquired (step S405). If the special storage unit is provided for storing the time information, for example, the time information can be acquired from the storage unit. Moreover, the time information can be acquired from the information concerning a history of route search by the route searching unit 101. When it is determined not to consider the time information (step S203: NO), the processing proceeds to step S205.

Subsequently, it is determined whether to consider the weather information (step S406). The determination whether to consider the weather information can be made based on a setting in, for example, the determining unit 103. When it is determined to consider the weather information (step S406: YES), the weather information is acquired (step S407). If the special storage unit is provided for storing the weather information, the weather information can be acquired from the special storage unit. Moreover, it can be configured to acquire the information from an external source at the point of time when it is determined to consider the weather information. When it is determined not to consider the weather information (step S406: NO), the processing proceeds to step S408.

A program to be recorded is then determined based on the keyword that is created at step S403, and the time information or the weather information (step S408). For example, when keywords of "Tokyo Zoo", "panda", "koala", "giraffe", and "lion" are created, a program that includes the keyword in the title thereof, such as a program titled "the Latest Tokyo Zoo Information" or "Ecology of the King of Beasts, Lions" is determined as a program to be recorded. Further, information concerning the determined program is accumulated (step S409). The "information concerning the program" that is accumulated at step S409 is, for example, information required to record the program such as a broadcast date, a broadcast time, and a broadcast channel. If it is not determined that the program start time has come (step S410: NO), the processing returns to step S401. When it is determined that the program start time has come (step S410: YES), it is determined whether the remaining power of battery is greater than a predetermined value (step S411). In Fig. 4, the processing at step S411 is described as "battery remaining power>predetermined value?".

When it is determined that the remaining power of the battery is greater than the predetermined value (step S411: YES), a recording process is performed (step S412). At step S412, the program that is identified by the information concerning the program accumulated at step S409 is recorded. When it is determined that the remaining power of the battery is less than the predetermined value (step S411: NO), the processing returns to step S401.

As described, according to the program recording device of the second embodiment, a keyword is created from the information concerning a destination or information concerning a route to the destination that is searched for based on map information. Besides this, information concerning at least one of a date and time on which the route is searched for or a date and time on which the moving unit travels on the route is acquired. Moreover, according to the program recording device of the second embodiment, information concerning the weather at the time when the route is searched for or the weather at the time when the moving unit travels on the route is acquired. Thus, a program to be recorded is determined based on the created keyword and the acquired information.

Thus, it is possible to record a program that is related to activities of the user without requiring a complicated operation such as designation of a broadcast date, a broadcast time, and a broadcast channel, or a keyword in advance. As a result, it is possible to record a program for which the user has an interest (or program that is related to the interest) without requiring an operation by the user. Furthermore, it is possible to selectively record a program that is further related to activities of the user or memories relating to the activities.

### Example

### (Hardware Configuration of Navigation Device)

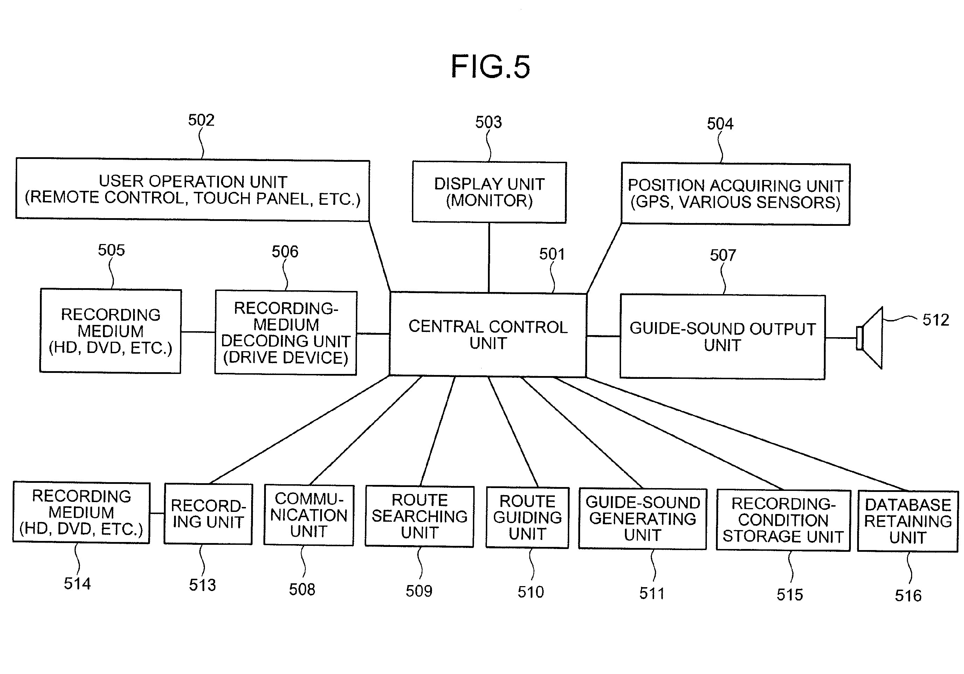

Next, a navigation device according to an example of the present invention is explained. The navigation device according to the present example is one example that implements the program recording device according to the present invention. First, the hardware configuration of the navigation device is explained. Fig. 5 is a block diagram illustrating one example of the hardware configuration of the navigation device according to the example of the present invention.

The navigation device according to the example of the present invention shown in Fig. 5 is mounted on a vehicle and includes a central control unit 501, a user operation unit 502, a display unit 503, a position acquiring unit 504, a recording medium 505, a recording-medium decoding unit 506, a guide-sound output unit 507, a communication unit 508, a route searching unit 509, a route guiding unit 510, a guide-sound generating unit 511, a speaker 512, a recording unit 513, a recording medium 514, and a recording-condition storage unit 515, and a database retaining unit 516.

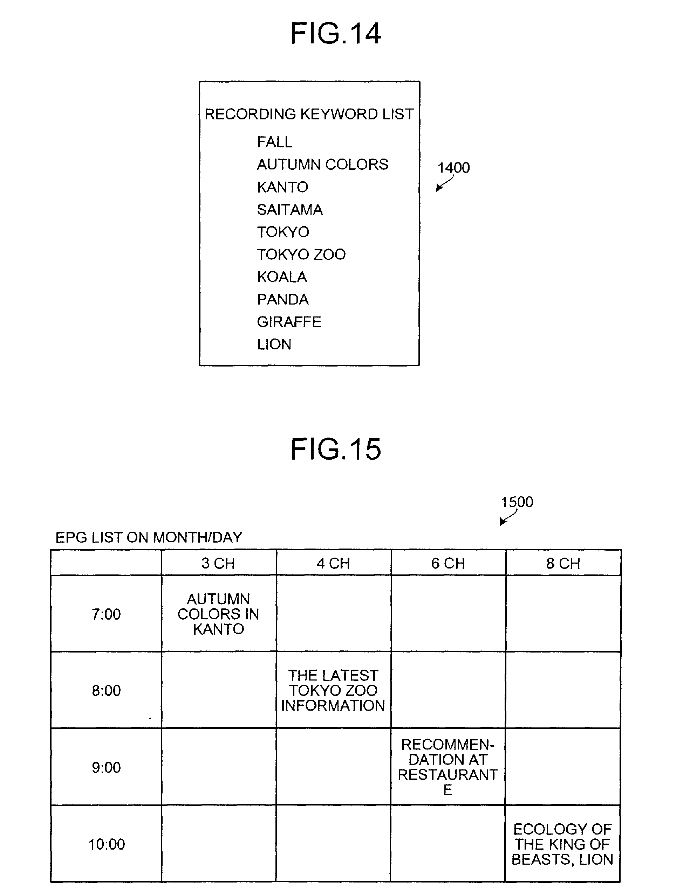

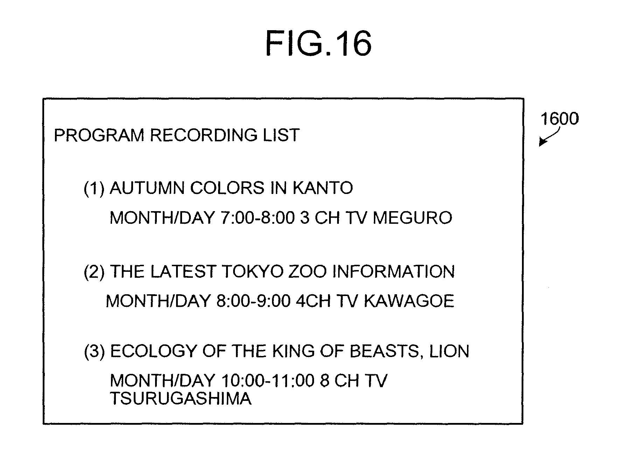

The central control unit 501 controls the entire navigation device. The central control unit 501 can be implemented by, for example, a microcomputer that is constituted of a CPU (central processing unit) that executes predetermined arithmetic processing, a ROM (read only memory) that stores various control programs, a RAM (random access memory) that functions as a work area of the CPU, and the like. In the ROM or the RAM, a memory area is secured in which information that is obtained from an external source outside of the navigation device, such as an EPG list (see Fig. 15) is rewritably stored.
Furthermore, in the ROM or the RAM, a memory area is secured in which a program recording list (see Fig. 16) is rewritably stored.

The central control unit 501 calculates a position on a map at which the vehicle is traveling based on information of a current position that is acquired by the position acquiring unit 504 and map information that is acquired from the recording medium 505 through the recording-medium decoding unit 506, and outputs a result of the calculation to the display unit 503. Moreover, the central control unit 501 communicates information concerning route guidance with the route searching unit 509, the route guiding unit 510, and the guide-sound generating unit 511, at performing the route guidance, and outputs to the display unit 503 and the guide-sound output unit 507 the information that is obtained as a result of the communication.

The user operation unit 502 outputs information, such as characters, numerical values, and various instructions, that is input by a user to the central control unit 501.
As a configuration of the user operation unit 502, various conventional methods such as a push-button switch, a touch panel, a keyboard, and a joystick that detect physical force of pressing/not pressing can be adopted. The user operation unit 502 can be configured to be operated by voice input using a microphone that receives external sound.

The user operation unit 502 can be integrally provided in the navigation device or can take a form that enables operation from a unit separate from the navigation device such as a remote control. The user operation unit 502 can be configured in any one of the forms described above, or can be configured in more than one form. The user inputs information by performing input operation appropriately according to the configuration of the user operation unit 502. The information input by operating the user operation unit 502 includes, for example, destination. Specifically, for example, when the navigation device is mounted on a vehicle or the like, a point to which a person riding in the vehicle is heading is set.

For example, when a touch panel is employed as the form of the user operation unit 502, this touch panel is stacked on a display side of the display unit 503, to be used. In this case, input information is recognized by controlling display timing on the display unit 503, operating timing to the touch panel (user operation unit 502), and positional coordinates thereof. By employing a touch panel that is stacked on the display unit 503 as the user operation unit 502, it becomes possible to input a lot of information without increasing the size of the user operation unit 502. As a touch panel, various conventional touch panels such as a resistive touch panel and a pressure-sensitive touch panel can be used.

The display unit (monitor) 502 includes, for example, a CRT (cathode ray tube), a TFT liquid display, an organic EL display, a plasma display, and the like. The display unit 503 can be constituted of, for example, an image I/F and a display device for image display that is connected to the image I/F. Specifically, the image I/F is configured with, for example, a graphic controller that controls the entire display device, a buffer memory such as VRAM (video RAM) that temporarily stores image information that can be displayed immediately, and a control IC that controls display of the display device based on the image information output by the graphic controller. On the display unit 503, various kinds of information including an icon, a cursor, a menu, a window, a character, an image, and the like are displayed. Moreover, on the display unit 503, map information that is stored on the recording medium 505 and information concerning route guidance are displayed.

The position acquiring unit 504 acquires a current position of the device. The current position of the device is acquired by receiving a radio wave from a GPS satellite to measure the geometric position relative to the GPS satellite, and can be measured at any place on Earth. The GPS is an abbreviation of global positioning system, and is a system in which a position on the ground is accurately measured by receiving radio waves from at least four satellites. Since the GPS is a conventional technology, the explanation thereof is omitted. The position acquiring unit 504 can be configured by, for example, an antenna to receive the radio waves from the satellite, a tuner that demodulates the received radio waves, an arithmetic circuit that calculates a current position based on information acquired by demodulation, and the like.

As the radio wave from the GPS satellite, an L1 wave is used that is a carrier wave of 1.57542 GHz and on which a C/A (coarse and access) code and a navigation message are carried. With this wave, the current position (latitude and longitude) of the device is detected. At detection of the current position of the device, information collected by various sensors such as a vehicle speed sensor and a gyro sensor can be taken into consideration. The vehicle speed sensor detects from an output-side shaft of the transmission of the vehicle on which the navigation device is mounted.

Other than those, information collected from various sensors such as an angular speed sensor, an odometer, and an inclination sensor can be taken into consideration at acquisition of the current position of the device. The angular speed sensor detects an angular speed of the vehicle at turning, and outputs angular speed information and a relative bearing information. The odometer calculates the number of pulses per rotation of a wheel by counting the number of pulse signals having a predetermined cycle that are output according to rotation of the wheel, and outputs travel distance information based on the number of pulses per rotation. The inclination sensor detects an inclination angle of a road surface and outputs inclination angle information.

The recording medium 505 records various control programs in a computer-readable format and various kinds of information. The recording medium 505 accepts writing of information by the recording-medium decoding unit 506 and records the written information in a non-volatile manner. The recording medium 505 can be implemented, for example, by an HD (hard disk). The recording medium 505 is not limited to an HD, and instead of an HD, or in addition to an HD, a medium, such as a DVD (digital versatile disk) and a CD (compact disk), that is attachable and detachable to and from the recording-medium decoding unit 506 and is portable can be used as the recording medium 505. Furthermore, the recording medium 505 is not limited to a DVD or a CD, and a medium, such as a CD-ROM (CD-R, CD-RW), an MO (magneto-optical disk), and a memory card, that is attachable and detachable to and from the recording-medium decoding unit 506 and is portable can be used.

On the recording medium 505 according to the present example, a program recording program that implements the present invention, map information, and the like are recorded. The map information includes background information that expresses features such as buildings, rivers, and ground surfaces, and road configuration information that expresses a configuration of roads. The map information is two-dimensionally or three-dimensionally illustrated on a display screen of the display unit 503.

The background information includes background configuration information that expresses a configuration of backgrounds and background type information that expresses a type of backgrounds. The background configuration information includes information expressing, for example, a representative point of a feature, a polyline, a polygon, coordinates of the feature, and the like. The background type information includes, for example, text information expressing name, address, and phone number of a building and the like, and type information expressing a type of a feature, such as building, river, and the like.

The road configuration information is information concerning a road network that has a plurality of nodes and links. The node is information that indicates an intersection at which a plurality of roads intersect, such as a junction of three streets, a crossroad, a junction of five streets, and the like. The link is information that indicates a road connecting between nodes. Some of the links include configuration complementary points that enable expression of a curved road. The road configuration information includes traffic condition information. The traffic condition information is information that indicates a characteristic of an intersection, length (distance) of each link, vehicle width, a traveling direction, passage prohibition, a road type, and the like.

As a characteristic of an intersection, for example, a complicated intersection such as a junction of three streets and a junction of five streets, an intersection that branches at a shallow angle, an intersection near the destination, an entrance and an exit or a junction of an expressway, such an intersection that a route deviation rate is high, and the like are indicated. The route deviation rate can be calculated from, for example, a past driving history. As a road type, for example, an expressway, a toll road, an ordinary road, and the like are indicated. In the present embodiment, passage prohibition that is included in the traffic condition information indicates a road that is always closed to traffic, and passage prohibition included in the road traffic information that is received by the communication I/F indicates a road that is closed to traffic due to irregular control only for a predetermined period.

Although in the present example, the map information is recorded on the recording medium 505, it is not limited thereto. The map information is not limited to being recorded on a unit that is integrally provided in the hardware of the navigation device, and can be provided outside the navigation device. In this case, the navigation device acquires the map information, for example, through the communication unit 508 via a network. The acquired map information is stored in the RAM or the like.

The recording-medium decoding unit 506 controls reading/writing of information with respect to the recording medium 505. For example, when an HD is used as the recording medium 505, the recording-medium decoding unit 506 is an HDD (hard disk drive). Similarly, when a DVD or a CD (CD-R, CD-RW) is used as the recording medium 505, the recording-medium decoding unit 506 is a DVD drive or a CD drive. When a CD-ROM (CD-R, CD-RW), an MO, a memory card, or the like is used as the recording medium 505 that is writable and attachable/detachable, a special drive device that can write information to each type of the recording medium 505 and can read out information stored in each type of the recording medium 505 is appropriately used as the recording-medium decoding unit 506.

The guidance-sound output unit 507 reproduces a guidance sound by controlling output to the speaker 512 connected thereto. The speaker 512 can be one or more. Specifically, the guide-sound output unit 507 can be implemented by a sound I/F that is connected to the speaker 512 for sound output. More specifically, the sound I/F can be constituted of, for example, a D/A converter that performs D/A conversion on digital sound information, an amplifier that amplifies an analog sound signal that is output from the D/A converter, and an A/D converter that performs A/D conversion on analog sound information.

The communication unit 508 receives radio waves (television waves) that include an electrical signal of a television program that is modulated at a television station and that is transmitted on a high frequency carrier wave. Therefore, the communication unit 508 includes an antenna that can induce a large current by resonating with the frequency of the television waves, to receive the television waves. Moreover, the communication unit 508 includes a tuner to obtain a specific frequency of the television waves in the received radio waves. The television waves that are obtained by the tuner are separated into a carrier wave and an electrical signal again by sound detection and image detection. Since reception and transmission of the television waves and processing of the received television waves are conventional technologies, the explanation thereof is omitted.

For example, when the weather information is received from outside of the navigation device, the communication unit 508 can communicate with an external server or the like that stores various information, to acquire the weather information. The communication at acquiring the weather information can be achieved by a various radio communication techniques publicly known. Since the configuration and the communication technique at the acquisition of the weather information are conventional technologies, the explanation thereof is omitted in the present example.

The communication unit 508 can regularly (or irregularly) receive road traffic information including information concerning traffic congestion and traffic controls. The reception of the road traffic information by the communication unit 508 can be performed when road traffic information is distributed from a VICS (vehicle information and communication system) center, or can be performed by periodically requesting the VICS center for road traffic information. The communication unit 508 can be implemented as an FM tuner, a VICS/beacon receiver, and other communication devices. The received road traffic information is used for re-searching for a route that is being guided.

Although detailed explanation is omitted since the technology is conventional, "VICS" is an information communication system that transmits, in real time, road traffic information including information concerning traffic jams and traffic controls that is edited and processed in the VICS center, to express in characters and graphics on the navigation device and the like. The method of transmitting the road traffic information (VICS information) that is edited and processed at the VICS center to the car navigation device includes a method using a "beacon" and "FM multiplex broadcasting" provided on each road. The "beacon" includes a "radio wave beacon" that is mainly used on an expressway and an "optical beacon" that is used on major ordinary roads. When "FM multiplex broadcasting" is used, reception of road traffic information of a wide area is possible. When the "beacon" is used, reception of road traffic information that is necessary at a place at which the vehicle is positioned, such as detailed information concerning the nearest road relative to the position of the vehicle.

The route searching unit 509 calculates an optimal route from the current position to the destination based on a current position that is acquired by the position acquiring unit 604, the destination that is input by a user, and the map information that is acquired from the recording medium 505 through the recording-medium decoding unit 506. In the present example, the calculation of an optimal route from the current position to the destination that is performed by the route searching unit 509 is explained as searching for a route or route search.

The route searched for by the route searching unit 509 includes a route that is obtained as a result of re-searching for a route during route guidance by the route guiding unit 510, in addition to a route that is searched for before the start of the route guidance by the route guiding unit 510. Re-searching for a route is performed when a transit point or the destination is intentionally changed by the user and the like, as well as when a traffic jam occurs on the route that is being guided. It is often the case that intention of the user is reflected in the researched for route. For example, when a route passing along a coast is searched for after a route passing along mountains has already been searched for, it can be presumed that a preference for the route passing along a coast relative to the route passing along mountains is most likely reflected. The route that is searched for by the route searching unit 509 or information concerning the destination that is set at the route searching can be stored in a storage unit, not shown, such as a ROM and a RAM, that is provided in the navigation device.

The route guiding unit 510 generates real time route guiding information based on the information concerning the route that is searched for by the route searching unit 509, or the road traffic information that is received by the communication unit 508, the information concerning the current position that is acquired by the position acquiring unit 604, and the map information that is acquired from the recording medium 505 through the recording-medium decoding unit 506. The route guiding information that is generated by the route guiding unit 510 is output to the display unit 503 through the central control unit 501.

The guidance-sound generating unit 511 generates information of tone and sound corresponding to patterns. Specifically, the guidance-sound generating unit 511 performs setting of a virtual sound source corresponding to the guiding point and generation of the sound guidance information based on the route guiding information that is generated by the route guiding unit 510, to output to the guide-sound output unit 507 through the central control unit 501.

The recording unit 513 records on the recording medium 514 a television program that is received by the communication unit 508. When an HD is used as the recording medium 514, the recording unit 513 is an HD recorder. When a DVD is used as the recording medium 514, the recording unit 513 is a DVD recorder. Since it is a conventional technology, explanation of the configurations of the HD recorder and the DVD recorder, and the mechanisms of timer-recording of a television program by the HD recorder and the DVD recorder is omitted.

On the recording medium 514, the television program that is received by the communication unit 508 is recorded by the recording unit 513. The recording medium 514 stores information concerning the television program that is recorded by the recording unit 513 in a non-volatile manner. At recording, image and sound information is recorded. The recording medium 514 is not limited to a disk medium such as an HD and a DVD, and, for example, a semiconductor memory such as a flash memory and other various media can be used.

The recoding-condition storage unit 515 stores various conditions that are set at timer-recording. The various conditions that are set at timer-recording include, for example, "whether the time information and the weather information are considered when creating a keyword used to determine a program to be recorded". The time information is information concerning at least a date and time at which a route is searched for by the route searching unit 509. Furthermore, the time information is information concerning at least a date and time at which the route that has been searched for by the route searching unit 509 is traveled by the mobile unit.

The weather information is information concerning weather when the route is searched for by the route searching unit 509. Moreover, the weather information is information concerning the weather when the route that has been searched for by the route searching unit 509 is traveled by the mobile unit. Special storage units to store the time information and the weather information can be provided, and the time information and the weather information can be stored in the special storage units.
The time information and the weather information can be appropriately acquired from an external server or the like as necessary for creating a keyword, which is used to determine a program to be recorded. In the recording-condition storage unit 515, as various conditions that are set at timer-recording, for example, a recording mode such as a standard recording mode and an extended-time recording mode is set.

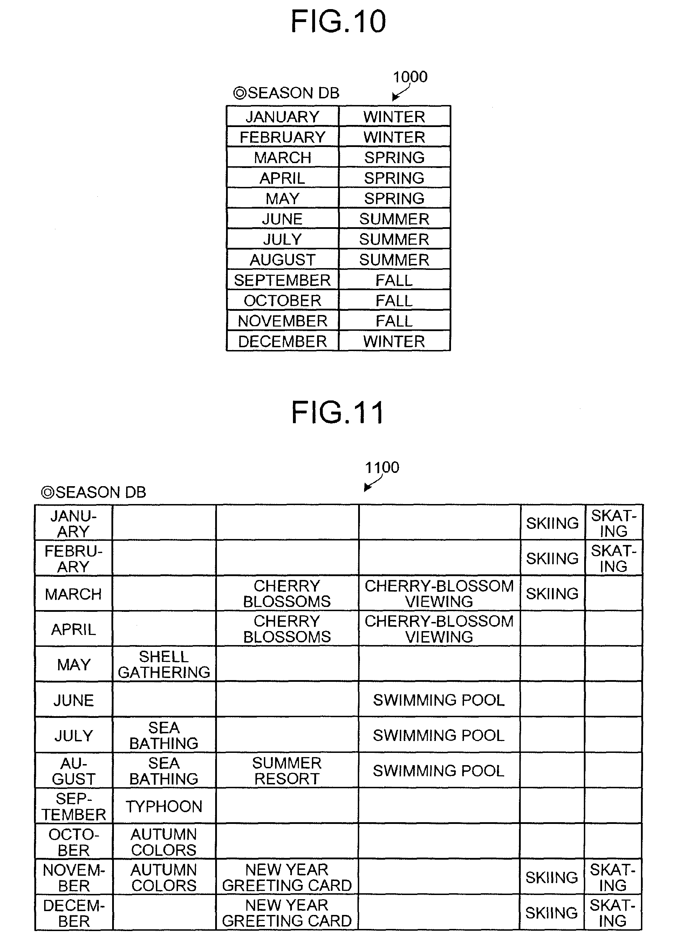

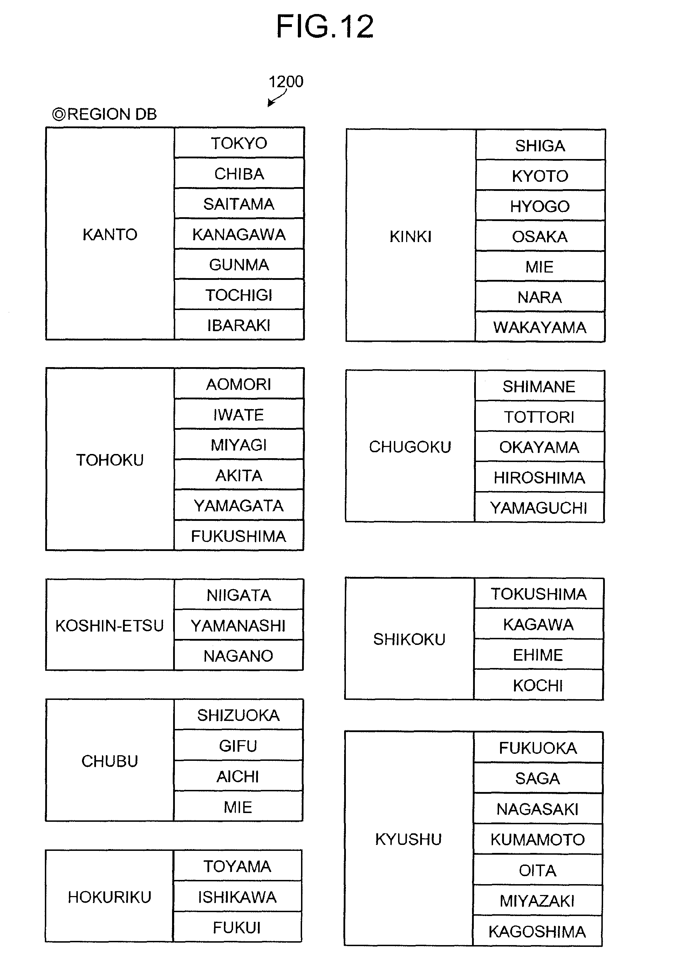

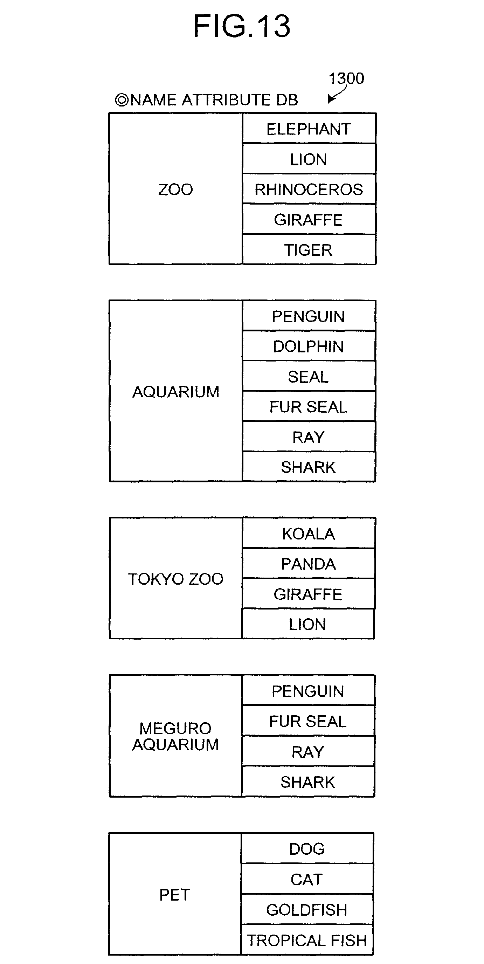

The database retaining unit 516 retains various databases such as a season database (see Fig. 10, Fig. 11), a region database (see Fig. 12), and a name attribute database (see Fig. 13). Contents of each database in the database retaining unit 516 can be regularly (or irregularly) updated, or can be fixed. Moreover, contents of each database in the database retaining unit 516 are not limited to be contents held in the navigation device in an installed manner. For example, the contents of each database can be retained in a disk medium such as an HD or a DVD. In this case, the database retaining unit 516 is constituted of a disk medium, such as an HD or a DVD, and a disk drive device that is capable of reading information recorded on the disk medium.

### (Procedure of Processing by Navigation Device)

Next, procedures of processing by the navigation device according to the example of the present invention are explained. The processing of the navigation device according to the example of the present invention is realized by appropriately executing each process of the program recording including creating a keyword and the program timer-recording list.

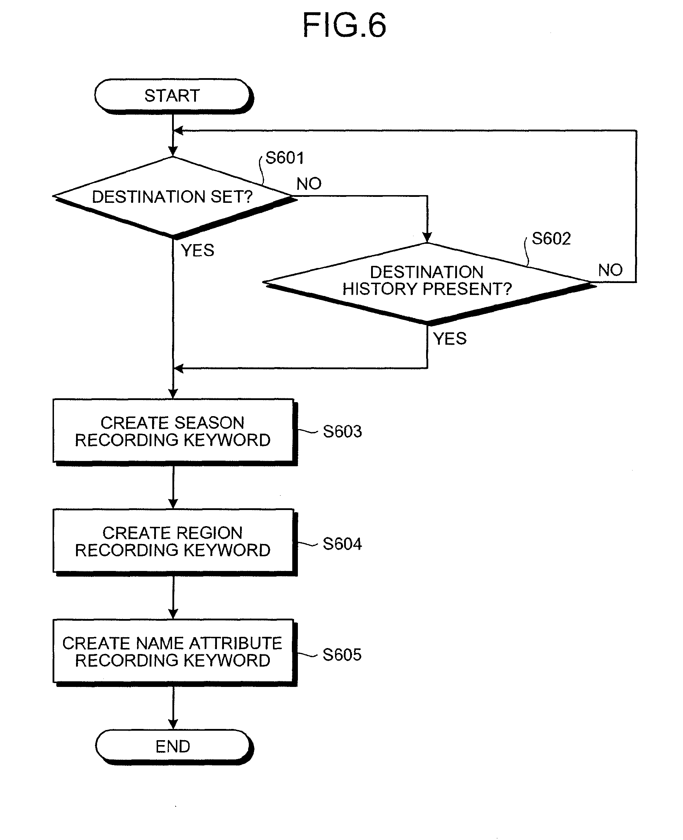

Fig. 6 is a flowchart for explaining procedures of processing performed at creating a keyword. In the processing shown in Fig. 6, first, it is determined whether a destination is set (step S601). When it is determined that a destination is not set (step S601: NO), it is determined whether a history of destinations that have been set in the past exists (step S602). When it is determined that the history of destinations does not exist (step S602: NO), the processing returns to step S601. Hereinafter, a destination that is acquired from the set destination and from the history is simply explained as "destination".

When it is determined that a destination is set at step S601 (step S601: YES), or when it is determined that the history of destinations exists (step S602: YES), a season recording keyword is created from the time information concerning this destination (step 5603). At step S603, first, information concerning date and time on which the destination is set, or date and time of travel on a route to the destination is acquired as the time information. A season recording keyword is then created by extracting, from the season database, a season recording keyword that corresponds to a date and time that are identified by the acquired time information. Specifically, for example, when the date and time that are identified by the time information correspond to one day in December, a season recording keyword of "winter" is created. Moreover, when the date and time that are identified by the time information correspond to one day in December, season recording keywords of "new year greeting card", "skiing", and the like are created.

Next, a region recording keyword is created (step S604). At step S604, a region recording keyword that corresponds to a region of the destination or a region included in a route to the destination is created, from information concerning the destination or information concerning the route to the destination. Specifically, for example, when a departure point is a certain place in Saitama prefecture and the destination is a certain place in Tokyo, region keywords of "Kanto", "Saitama", "Tokyo", and the like are created.

Subsequently, a name attribute recording keyword is created (step S605). At step S605, for example, a name attribute recording keyword relating to the name of the destination is created. Specifically, for example, when the destination is "Tokyo Zoo", which is located at a certain place in Tokyo, names of animals kept in the zoo such as "koala" and "panda" are created as name attribute recording keywords. The respective keywords that are created by processing at steps S603 to S605 in the present example implement the keyword of the present invention.

While in the present example, a case where the time information is taken into consideration at creating each recording keyword, as in step S603, has been explained, creation of recording keywords is not limited thereto. The recording keywords can be created considering the weather information in addition to the time information. For example, at step S603, when the weather of the day on which the destination is set or the day of departure to the destination is "snow", a keyword such as "skiing" and "skating" that is related to snow can be created. In this case, configuration can be such that a special database for storing a keyword that is created based on the weather information is provided, and based on the database, a keyword that is related to snow is created. It is not limited to consider either of the time information or the weather information, and a recording keyword can be created considering both the time information and the weather information.

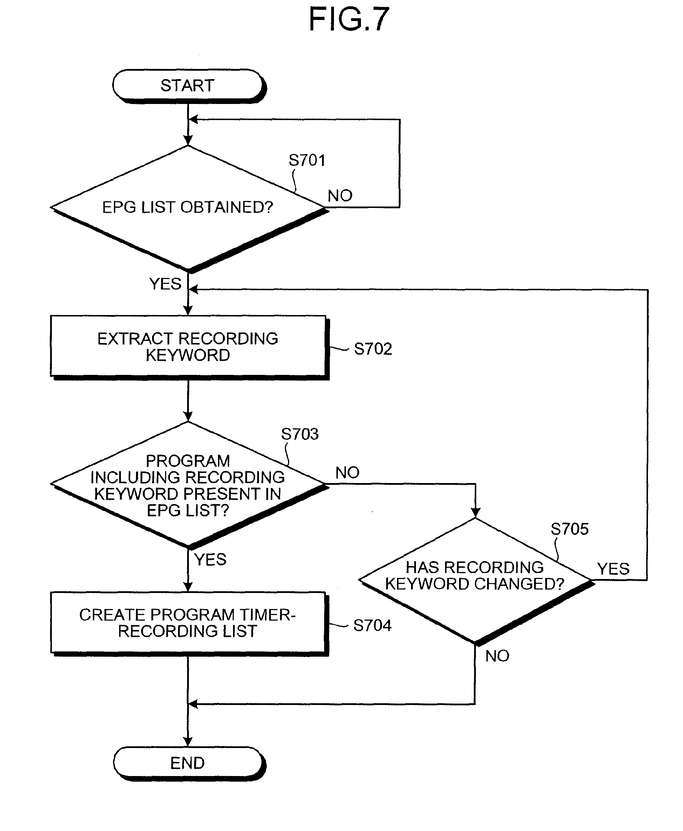

Fig. 7 is a flowchart for explaining procedures of processing that is performed at creating the program timer-recording list. In the processing shown in Fig. 7, the process remains in standby until it is determined that an EPG list has been obtained (step S701: NO). Although a commonly known technology, the EPG list is transmitted periodically using a radio wave between transmission frequency bands and as such, for example, the obtaining of the EPG list at S701 occurs corresponding to the transmission of the EPG list.

When it is determined that the EPG list is obtained (step S701: YES), a recording keyword is extracted (step S702). In the present example, the keyword of the present invention is implemented by the recording keyword extracted at step S402. At step S702, a recording keyword is extracted based on the season recording keyword, the region recording keyword, and the name attribute recording keyword that are created by the processing shown in Fig. 6. For example, all of the season recording keywords, the region recording keywords, and the name attribute recording keywords can be extracted as the keywords.

Next, it is determined whether a program that includes the extracted recording keyword is present in the EPG list (step S703). When it is determined that a program that includes the recording keyword is present in the EPG list (step S703: YES), the program timer-recording list is created (step S704). For example, when "fall" and "Kanto" are extracted as the recording keywords, the program timer recording list is created so that a program titled "Autumn Colors in Kanto" is to be recorded.

When it is determined that a program that includes the recording keyword is not present in the EPG list (step S703: NO), it is determined whether the recording keyword has changed (step S705). When it is determined that the recording keyword has changed (step S705: YES), the processing proceeds to step S702. When it is determined that the recording keyword has not changed (step S705: NO), the processing is terminated.

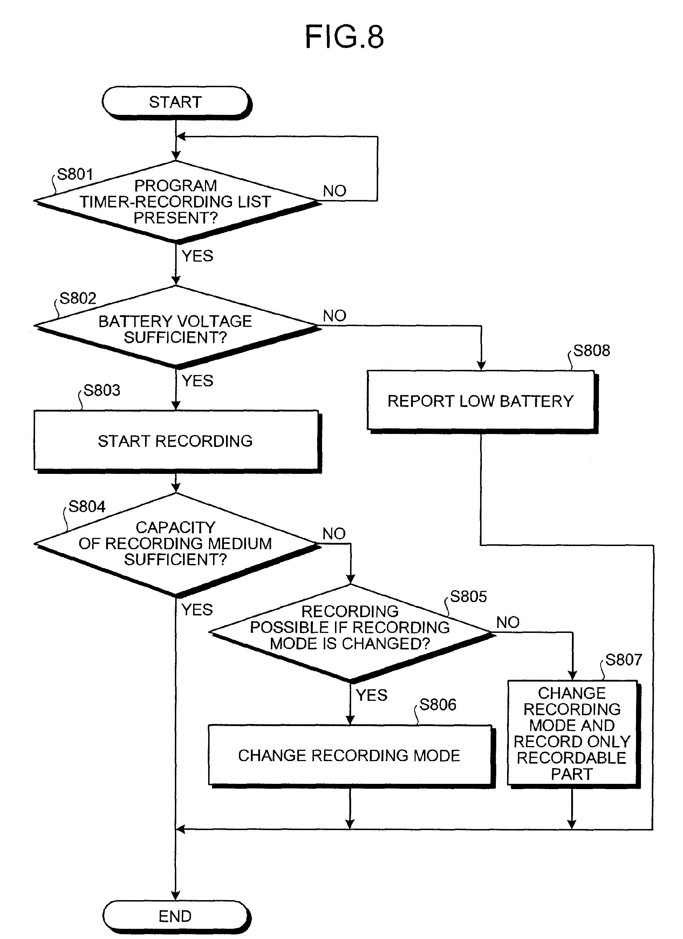

Fig. 8 is a flowchart for explaining procedures of processing performed at the program recording. In the processing shown in Fig. 8, first, it is determined whether the program timer-recording list is present (step S801). When it is determined that the program timer-recording list is present (step S801: YES), it is determined whether the battery has sufficient voltage (step 5802). At step S802, whether the battery has sufficient voltage is determined by detecting a voltage of the battery, and by determining whether the detected voltage is equal to or higher than a predetermined value. When the detected voltage is lower than the threshold, it is determined that the battery has insufficient voltage.

When it is determined that the battery has sufficient voltage (step S802: YES), recording of the program is started when a broadcast time of the program for which recording is programmed has come, based on the program timer-recording list (step S803). An available capacity of the recording medium 514 is monitored during the recording of the program, and it is determined whether the available capacity of the recording medium is sufficient (step S804).

When it is determined that the available capacity of the recording medium 514 is sufficient (step S804: YES), the recording of the program is continued until the program ends, and the processing is finished. On the other hand, when it is determined that the available capacity of the recording medium 514 is not sufficient (step S804: NO), it is determined whether the recording of the program is possible if the recording mode is changed (step S805).

A change of the recording mode indicates a change from the standard recording mode in which priority is given to image quality to an extended-time recording mode in which priority is given to extension of the recording time that is three times longer, for example, a change from the standard recording mode to the extended-time recording mode. When it is determined that the program recording is possible if the recording mode is changed (step S805: YES), the recording mode is changed to the extended-time recording mode (step S806), and the program recording continues until the program ends, and the processing ends. When it is determined that even if the recording mode is changed, the program recording is impossible (step S805: NO), the recording mode is changed to the extended-time recording mode, and the recording is performed only for a possible part of the program (step S807).

When it is determined that the battery does not have sufficient voltage at step S802 (step S802: NO), a report indicating that the battery capacity is low is made (step S808). The report at step S808 can be made by transmitting a message indicating that the battery capacity is low to, for example, an address of a mobile telephone of a user that is set in advance. With this arrangement, it is possible to certainly notify the user that the battery capacity is low. Other than this method, the report at step S808 can also be made by, for example, a beeper that generates alarm sound according to an instruction from the navigation device.

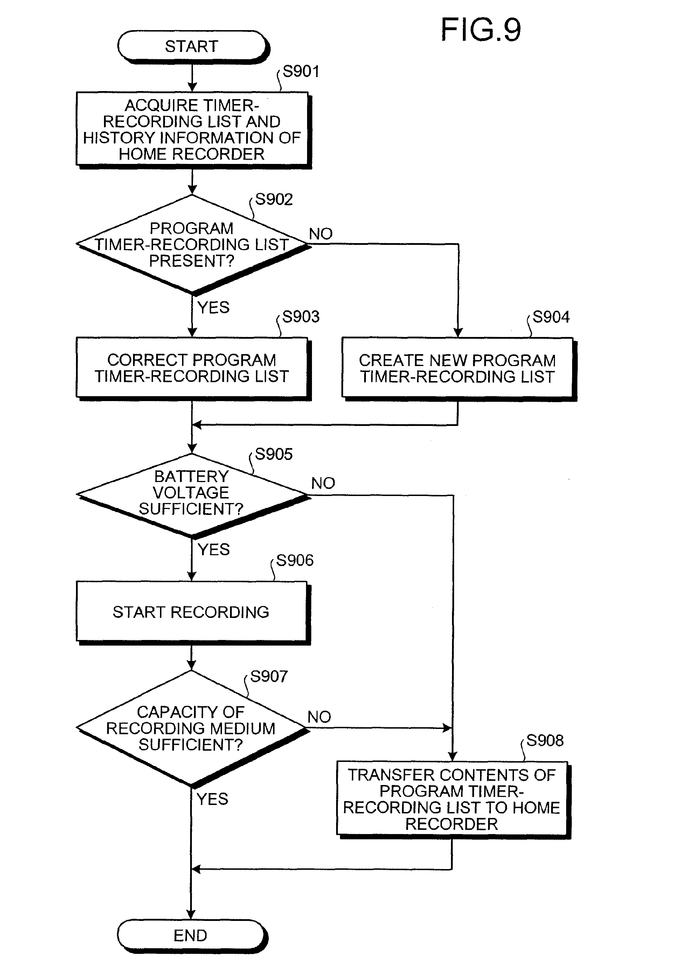

Furthermore, at program recording, processing shown in Fig. 9 can be performed in addition to the processing shown in Fig. 8. Fig. 9 is a flowchart for explaining different procedures of processing performed at the program recording. In the processing shown in Fig. 9, first, a timer-recording list and history information of a home recorder is obtained (step S901). The recorder at home includes an HDD recorder. Then, it is determined whether a program timer-recording list is present (step S902). When it is determined that the program timer-recording list is present (step S902: YES), the program timer-recording list is corrected so as to add the information concerning a timer-recording list and history of the recorder at home (step S903).

At step S903 in Fig. 9, it is described as "correct program timer recording list by adding information". On the other hand, when it is determined that the program timer-recording list is not present (step S902: NO), a program timer-recording list is newly created based on the information concerning a timer-recording list and a history of the recorder at home (step S904). At step S904 in Fig. 9, the list is described as "create new program timer recording list".

Subsequently, it is determined whether the battery has sufficient voltage (step S905). At step S905, whether the battery has sufficient voltage is determined in a similar manner as step S802.

When it is determined that the battery has sufficient voltage (step S905: YES), program recording begins when a broadcast time of a program that is programmed to be recorded has come, based on the program timer-recording list that is corrected to add information or newly created at step S603 or step S604 (step S906). An available capacity of the recording medium 514 is monitored during the recording of the program, and it is determined whether the available capacity of the recording medium 514 is sufficient (step S907). When it is determined that the available capacity of the recording medium 514 is sufficient (step S907: YES), the recording of the program continues until the program ends, and the processing ends.

On the other hand, when it is determined that the available capacity of the recording medium is not sufficient (step S907: NO), or when it is determined that the battery does not have sufficient voltage (step S905: NO), contents of the program timer-recording list are transferred to the home recorder (step S908). At step S908 in Fig. 9, the process is described as "transfer contents of program timer recording list to home recorder". The home recorder records a program that is scheduled to be recorded based on the data that is transferred from the navigation device. Since the home recorder and the program recording processing of the home recorder are conventional technologies, the explanation thereof is omitted.

Moreover, while in the present example, a case where respective recording keywords (keyword of the present invention) are created considering the time information and the weather information has been explained, it is not limited thereto. For example, arrangement can be such that a keyword is created based on the information concerning the destination and the route, and the time information and the weather information are taken into consideration at the time of determining a program to be recorded. In other words, in the present invention, configuration can be such that the time information and the weather information are taken into consideration at the time of creating a keyword and a recording program is determined based on this keyword, or can be configured such that a recording program is determined based on the keyword that is created from the information concerning the destination or the route, and the time information and the weather information.

As described above, according to the navigation device according to the present example, a keyword is created from information concerning a route to a destination that is searched for based on information concerning the destination or on map information and a program that is determined based on the created keyword is recorded, thereby enabling to record a program in which the user is interested without requiring a complicated operation such as advance designation of a broadcast date, a broadcast time, and a broadcast channel, or a keyword. This enables the user, for example, when a historic site or the like is set as the destination, to appropriately accumulate information concerning this historic site and to deepen understanding and interest thereof.

When a keyword to determine a program to be recorded is created from the information concerning the destination or the information concerning the route, based on the information concerning at least a date and time on which the route is searched for or a date and time on which the moving unit travels on the route, a program that is determined considering timing of an operation or activity actually carried out by the user can be recorded.

Furthermore, when a keyword to determine a program to be recorded is created from the information concerning the destination or the information concerning the route, based on the weather at the time when the route is searched for or the weather at the time when the moving unit travels on the route, a program that is determined considering the weather at the time when an operation or activity is actually carried out by the user can be recorded.

Thus, it is possible to record a program that has more relevance to the activities of a user or memories relating to the activities. As described, according to the navigation device of the present example, it is possible to improve the entertainment property to be provided to the user.

Moreover, while in the present example, a case where a recording keyword is extracted considering the time information and the weather information has been explained, it is not limited thereto. Configuration can be such that the information concerning at least one of a date and time on which the route is searched for or a date and time on which the moving unit travels on the route is extracted, and a keyword is created from the information concerning the destination or on the route and the acquired information.

Furthermore, configuration can be such that the weather at the time of a route search or the weather at the time the mobile unit travels along the route is acquired, and the keyword is generated from information concerning the destination or information concerning the route.

By determining a program to be recorded based the keyword thus created, it is possible to record a program that has more relevance to the activities of a user or memories relating to the activities, thereby making it possible to improve the entertainment property to be provided to the user.

In addition, according to the navigation device of the present example, a program is recorded according to a remaining power level of a battery in a mobile unit. This enables prevention of a cessation of recording in the middle of the program.

Fig. 10 is a diagram for explaining one example of a season database 1000. In the season database 1000 shown in Fig. 10, respective months from January to December are classified into either a season of spring, summer, fall, or winter. Fig. 11 is a diagram for explaining one example of another season database. In a season database 1100 shown in Fig. 11, under respective months from January to December, a plurality of words relating to these months are classified.

At step S603 shown in Fig. 6, for example, when departure to the destination is in October, a season recording keyword of "fall" is extracted, if extracted based on the season database 1000 shown in Fig. 10, and a season recording keyword of "autumn colors" is extracted, if extracted based on the season database 1100 shown in Fig. 11.

Fig. 12 is a diagram for explaining one example of a region database 1200. In the region database 1200 shown in Fig. 12, all prefectures in Japan are classified into regional units such as "Kanto" and "Hokuriku". At step S604 shown in Fig. 6, for example, when the departure point is a certain place in Saitama prefecture and the destination is "Tokyo Zoo" that is located at a certain place in Tokyo, if extracted based on the region database shown in Fig. 12, recording keywords of "Kanto", "Saitama", and "Tokyo" are extracted.

Fig. 13 is a diagram for explaining one example of the name attribute database. In a name attribute database 1300 shown in Fig. 13, various words are classified by word relating to the words. For example, words relating to name of animals such as "elephant", "lion", and "rhinoceros" are classified under a word (name) of "zoo". Words relating to name of animals that live in waterside such as "penguin", "dolphin", and "seal" are classified under a word (name) of "aquarium".

Furthermore, in the name attribute database 1300, for example, such a facility that keeps feature animals such as "koala" and "panda" is classified under an individual facility name such as "Tokyo Zoo". At step S605 shown in Fig. 6, for example, when the name of the destination is "Tokyo Zoo", if extracted based on the name attribute database 1300 shown in Fig. 13, recording keywords of "koala", "panda", "giraffe", and "lion" are to be extracted.

Fig. 14 is a diagram for explaining one example of a recording keyword list. In a recording keyword list 1400 shown in Fig. 14, respective keywords that are created by the processing at steps S603 to S605 shown in Fig. 6 are listed. Fig. 14 illustrates the recording keyword list 1400 in the case where a route search is executed setting a certain place in Saitama prefecture as the departure point, and "Tokyo Zoo" that is located at a certain place in Tokyo as the destination. In this recording keyword list 1400, "Tokyo Zoo" is listed as the information concerning the destination. Keywords of "Saitama" and "Kanto" in the recording keyword list 1400 implement the information concerning the route in the present invention.

Fig. 15 is a diagram for explaining one example of the EPG list. EPG (electronic program guide) is a system that displays a program listing on a screen of a television. An EPG list 1500 illustrates a display that is displayed on a screen of a television based on data of programs that is transmitted, using this EPG. Although the explanation is omitted since it is a conventional technology, a difference between EPG and an ordinary television program is that a layout thereof is set on a receiver side.

The EPG list 1500 differs depending on a television that receives the radio wave (or setting in the television). Fig. 15 illustrates the EPG list 700 that displays scheduled broadcasted programs of one day in sections in a table-form according to broadcast times and broadcast channels as a television schedule in a newspaper. As shown in Fig. 15, for example, a program titled "All About Amusement Park A" is scheduled to be broadcast on channel 3 from 7 o'clock on date of month/day.

Fig. 16 is a diagram for explaining one example of the program timer recording list. In a program timer recording list 1600, information concerning programs that are determined to be recorded is listed. In the program timer recording list 1600, for example, a start time of the programs determined to be recorded, a broadcast channel, length of program, and the like are listed for each of the programs, as the information concerning the programs.

Fig. 16 illustrates the program timer recording list 1600 that is created based on the recording keyword list 1400 shown in Fig. 14 and the EPG list 1500 shown in Fig. 15. From the program timer recording list 1600, it is understood that the programs titled "Autumn Colors in Kanto", "the Latest Tokyo Zoo Information", and "Ecology of the King of Beasts, Lions" are programmed to be recorded. The program titled "Autumn Colors in Kanto" is programmed to be recorded based on the recording keywords of "fall" and "Kanto" in the recording keyword list 1400. The program titled "Tokyo Zoo" is programmed to be recorded based on the keyword of "Tokyo Zoo" in the recording keyword list 1400. The program titled "Ecology of the King of Beasts, Lions" is programmed to be recorded based on the recording keyword of "lion" in the recording keyword list 1400.

A program recording method achieved by the navigation device explained in the present example is implemented by the execution of a program recording program that is prepared in advance, by a computer such as a personal computer and a workstation. Although in the present example, the program recording program is recorded on an HD as a recording medium, it is not limited such configuration. The program recording program is only required to be computer-readably recorded on a computer-readable recording medium, such as a flexible disk, a CD-ROM, an MO, or a DVD. Consequently, the program recording program recorded on a recording medium can be executed by being reading out from the recording medium by a computer. The program recording program is not limited to that recorded on a recording medium, and can be a transmission medium that can be distributed through a network such as the Internet.

## Claims

1. A program recording device comprising:
a route searching unit that searches for a route to a destination based on map information;
a keyword creating unit that creates a keyword from information concerning the destination or information concerning the route;
a determining unit that determines a program to be recorded based on the keyword that is created by the keyword creating unit; and
a recording unit that records the program that is determined by the determining unit.

2. The program recording device according to claim 1, further comprising:
a time-information acquiring unit that acquires information concerning at least one of date and time at which the route is searched for or at which a mobile unit travels on the route, wherein
the keyword creating unit creates a keyword from the information concerning the destination or the information concerning the route, based on the information that is acquired by the time-information acquiring unit.

3. The program recording device according to claim 1, further comprising:
a weather-information acquiring unit that acquires information concerning weather at a time when the route is searched for or when a mobile unit travels on the route, wherein
the keyword creating unit creates a keyword from the information concerning the destination or the information concerning the route, based on the information that is acquired by the weather-information acquiring unit.

4. The program recording device according to claim 1, further comprising:
a time-information acquiring unit that acquires information concerning at least one of date and time at which the route is searched for or at which a mobile unit travels on the route, wherein
the determining unit determines a program to be recorded based on the keyword that is created by the keyword creating unit and the information that is acquired by the time-information acquiring unit.

5. The program recording device according to claim 1, further comprising:
a weather-information acquiring unit that acquires information concerning weather at a time when the route is searched for or when a mobile unit travels on the route, wherein
the determining unit determines a program to be recorded based on the keyword that is created by the keyword creating unit and the information that is acquired by the weather-information acquiring unit.

6. The program recording device according to any one of claims 1 to 5, further comprising:
a detecting unit that detects a remaining power of a battery in the mobile unit, wherein
the recording unit records the program based on the remaining power of the battery that is detected by the detecting unit.

7. A program recording method including:
searching for a route to a destination based on map information;
creating a keyword from information concerning the destination or information concerning the route;
determining a program to be recorded based on the keyword that is created by the keyword creating unit; and
recording the program that is determined by the determining unit.

8. A program recording program that causes a computer to execute the program recording method according to claim 7.

9. A computer-readable recording medium that stores therein the program recording program according to claim 8.
